# DEMANDE DE BREVET EUROPEEN

(11) **EP 2 540 559 A1**
(43) Date de publication de la demande: **02.01.2013**
(21) Numéro de dépôt: 12305621.0
(22) Date de dépôt: 04.06.2012
(51) Int. Cl.: B60N 2/02, B60N 2/42, B60N 2/427, B60N 2/62, B60N 2/18

(54) **Siège réglable de véhicule**

(30) Priorité: 27.06.2011 FR 1155663
(71) Demandeur: Renault S.A.S., 92100 Boulogne-Billancourt (FR)
(72) Inventeur: Guenaud, Hervé, 78720 CERNAY LA VILLE (FR); Leclerc, Jean-Philippe, 28130 HOUX (FR)

(57) **Abrégé**

L'invention se rapporte à un siège réglable de véhicule comportant une assise (1) dotée d'un dispositif (3) anti sous-marinage.

La principale caractéristique d'un siège selon l'invention, est qu'il comporte un dispositif de levage (8) constitué par un bourrelet (9) en matériau mou et déformable et au moins un bras (10) de positionnement réglable supportant ledit bourrelet (9), ledit bras (10) pouvant coulisser le long d'un dispositif de guidage (11) solidarisé au dispositif anti sous-marinage (2), et en ce qu'une plaque mobile (26) est montée pivotante sur ledit dispositif anti sous-marinage (3), de manière à recouvrir ledit bourrelet (9), ledit dispositif de levage (8) et ladite plaque (26) étant recouverts par un garnissage.

## Description

L'invention se rapporte à un siège réglable de véhicule. Les véhicules développés actuellement, et en particulier les véhicules automobiles, possèdent un haut niveau de sécurité et sont conçus pour être de moins en moins polluants. Un autre axe de développement, qui fait l'objet d'un soin particulier de la part des constructeurs, est le confort et l'ergonomie du poste de conduite au sein de l'habitacle du véhicule. En effet, un conducteur doit, d'une part, se sentir confortablement installé lorsqu'il fait de la route, de façon à économiser de la fatigue et à pouvoir facilement se concentrer sur les éléments extérieurs au véhicule, et d'autre part, être en mesure de réaliser des opérations routinières, telles que l'actionnement de la pédale d'embrayage ou de frein, sans avoir à fournir d'efforts ni à se livrer à des contorsions exagérées. L'invention se rapporte à un siège de véhicule réglable, conçu pour le confort d'un conducteur, afin qu'il puisse piloter son véhicule en toute sérénité et sans contraintes particulières.

Les sièges réglables de véhicule existent et ont déjà fait l'objet de brevets. On peut, par exemple, citer le brevet US6386633B1, qui se rapporte à un siège de véhicule ajustable, possédant une partie arrière sous assise, et une partie avant sous assise, la distance entre lesdites parties étant réglable pour pouvoir allonger l'assise du siège selon un axe longitudinal du véhicule. De plus, la partie avant sous assise, peut être dotée d'un coussin gonflable relié à une réserve d'air sous pression, le gonflement dudit coussin provoquant une élévation de la partie avant de l'assise. Les mécanismes mis en oeuvre dans un tel siège sont compliqués et difficiles à implanter en raison d'un environnement encombré et peu accessible, et le soulèvement de la partie avant de l'assise ne peut être que de faible amplitude en raison de la configuration des pièces impliquées.

Les sièges réglables selon l'invention permettent une surélévation de la partie avant de leur assise, au moyen d'un mécanisme simple et découplé de ladite assise du siège, cette surélévation étant conçue pour offrir un bon maintien des cuisses, tout en facilitant l'actionnement des pédales de frein ou d'embrayage situées au niveau de ses pieds. De cette manière, le siège réglable selon l'invention apparait confortable et ergonomique pour le conducteur du véhicule. Cette surélévation est réalisée au moyen d'un dispositif de levage autonome, pouvant venir s'implanter sur un siège existant, sans perturber ses fonctionnalités originelles, en particulier celles liées à la sécurité de l'occupant.

Pour bien comprendre l'invention, les notions de « transversal », de « longitudinal », d' « avant », d' « arrière » doivent être interprétées par rapport aux directions généralement considérées d'un véhicule dans lequel serait implanté le siège.

L'invention a pour objet un siège réglable de véhicule comportant une assise dotée d'un dispositif anti sous-marinage. La principale caractéristique d'un siège réglable selon l'invention, est qu'il comporte un dispositif de levage constitué par un bourrelet en matériau mou et déformable et au moins un bras de positionnement réglable supportant ledit bourrelet, chaque bras pouvant coulisser le long d'un dispositif de guidage solidarisé au dispositif anti sous-marinage, une plaque mobile étant montée pivotante sur ledit dispositif anti sous-marinage de manière à recouvrir ledit bourrelet, ledit dispositif de levage et ladite plaque étant recouverts par un garnissage. Le terme « réglable » signifie que le relief de l'assise du siège est variable, au moyen d'une élévation plus ou moins marquée d'un bourrelet implanté dans cette assise. De cette manière, en fonction de la morphologie du conducteur et de sa taille, la position du bourrelet pourra être ajustée afin que ledit bourrelet puisse soutenir confortablement les jambes dudit conducteur, tout en lui permettant d'actionner facilement les pédales se trouvant à ses pieds, et qui commandent le freinage ou l'embrayage du véhicule. Le matériau du bourrelet doit être conçu non seulement pour que le conducteur ait un ressenti agréable lorsqu'il est assis sur son siège, mais également pour qu'il puisse remuer facilement les jambes afin d'agir rapidement et sans contrainte sur les pédales. Les mécanismes mis en jeu pour surélever le bourrelet sont simplifiés, car un bourrelet constitué par un matériau a priori léger, est toujours plus facile à déplacer qu'une assise de siège de plus grande taille et comportant une structure beaucoup plus lourde. Le terme « bourrelet » est général et désigne un objet fini ayant une certaine tenue mécanique, afin qu'il ne s'écrase pas ou qu'il n'adopte pas n'importe quelle forme, qui pourrait affecter sa fonction. Suivant les versions de véhicules retenues, le dispositif de levage peut être actionné, soit manuellement, soit automatiquement par l'intermédiaire d'un moteur. Il est supposé que le bourrelet peut occuper une pluralité de positions entre deux positions extrêmes, de façon à s'adapter précisément à la morphologie du conducteur. Le garnissage comprend de façon conventionnelle une mousse et une coiffe généralement constituée d'un tissu. Le dispositif anti sous-marinage sert non seulement à renforcer la sécurité du conducteur en évitant qu'il ne glisse sur son siège lors d'un choc du véhicule, mais sert également de support au mécanisme gérant le dispositif de levage selon l'invention. La plaque mobile va plus ou moins s'incliner en fonction de la position du bourrelet par rapport à l'assise, pour accompagner la position des jambes du conducteur reposant sur cette plaque, et améliorer le confort et l'ergonomie du siège. Le dispositif de guidage agit comme une rampe, dont l'inclinaison va fixer celle de chacun des bras de positionnement. Ce dispositif de guidage est solidarisé au dispositif anti sous-marinage par tout moyen, tel que par exemple, le soudage ou le vissage. Il est important de préciser que le dispositif anti sous-marinage n'est en rien affecté par l'implantation du bourrelet sur l'assise.

Avantageusement, le dispositif anti sous-marinage est constitué par une barre transversale et tubulaire. Il s'agit d'une configuration conventionnelle et usuelle, non spécifiquement développée pour une application liée à l'actionnement du dispositif de levage.

De façon préférentielle, chaque bras est en position inclinée et est apte à subir une translation le long de son axe longitudinal pour régler la position du bourrelet. Le terme « incliné » signifie que chaque bras est, ni en position verticale, ni en position horizontale. Par rapport au siège, le bourrelet va se déplacer simultanément dans une direction verticale et selon un plan horizontal.

De façon avantageuse, le siège réglable comprend deux bras de positionnement latéraux et inclinés, le bourrelet s'étendant selon une direction transversale du siège et pouvant se déplacer entre une première position rentrée pour laquelle il repose sur la partie avant de l'assise, et une deuxième position complètement déployée pour laquelle ledit bourrelet de retrouve dans une position avancée et surélevée par rapport à ladite assise. Le bourrelet contribue ainsi à agrandir vers l'avant l'assise du siège, tout en la surélevant. Il est supposé que les deux bras sont parallèles et se déplacent en même temps dans des plans longitudinaux et verticaux du véhicule.

Selon un mode de réalisation préféré d'un siège réglable selon l'invention, le dispositif de levage est piloté par un moteur solidarisé au dispositif de guidage et apte à fixer le bourrelet dans n'importe quelle position intermédiaire comprise entre la première et la deuxième position. De cette manière, la forme du siège peut varier continûment et être figée à tout instant, en fonction de la position recherchée. Avantageusement, le déploiement des bras de positionnement est réalisé au moyen d'une vis sans fin.

Préférentiellement, le bourrelet comprend une embase inférieure plane et rigide, et une partie supérieure arrondie réalisée dans un matériau mou et déformable. L'embase plane et rigide est destinée à privilégier les conditions de contact avec l'assise du siège, qui est généralement plane elle aussi. La partie arrondie est prévue pour venir au contact des jambes du conducteur, au niveau de leur pliure, afin de les soutenir efficacement et à permettre leur articulation sans gêne ni contrainte. Une embase rigide permet d'assurer une certaine tenue mécanique dudit bourrelet, afin que celui-ci n'adopte pas n'importe quelle forme, susceptible de remettre en question son efficacité.

Avantageusement, la partie supérieure du bourrelet est réalisée en mousse. Il s'agit d'un mode de réalisation particulièrement adapté pour répondre au double problème du confort et de l'ergonomie du siège.

De façon préférentielle, une première extrémité de la plaque mobile est montée articulée sur le dispositif anti sous-marinage, une deuxième extrémité reposant sur la partie supérieure du bourrelet. Ainsi, en fonction de la position du bourrelet, la plaque va se retrouver en position plus ou moins inclinée par rapport à un plan horizontal, car il est supposé que, quelle que soit la position du bourrelet, la plaque demeure toujours en appui contre la partie supérieure dudit bourrelet. Comme le conducteur est amené à être assis sur ladite plaque, il pourra ressentir un certain confort lié à l'inclinaison plus ou moins marquée de celle-ci, et qui va conditionner la position de ses jambes.

De façon avantageuse, la plaque mobile a une forme rectangulaire et est montée articulée au niveau de son extrémité arrière autour d'un axe transversal du dispositif anti sous-marinage, ladite plaque reposant sur le bourrelet au niveau de son extrémité avant. De cette manière, l'inclinaison de la plaque sera effective selon une direction longitudinale du siège et donc selon une direction longitudinale du véhicule sur lequel il est destiné à être implanté.

Préférentiellement, la partie supérieure du bourrelet est recouverte au moins partiellement par un film favorisant le glissement de la plaque sur ledit bourrelet, lorsque celui-ci est en mouvement entre deux positions. En effet, puisque la plaque est amenée à demeurer en permanence sur le bourrelet et à glisser sur celui-ci à chaque mouvement du dispositif de levage, il est important d'optimiser l'interface de contact entre ces deux éléments. Préférentiellement, le film de glissement est réalisé en plastique, par exemple en polyane dur, afin de rendre la surface dudit bourrelet la plus lisse possible. Il faut souligner qu'il est souhaitable que le film ne recouvre pas entièrement le bourrelet, sous peine de le rigidifier et de lui faire perdre son caractère déformable et confortable vis-à-vis du conducteur. De façon préférentielle, le film s'arrête à la moitié du bourrelet. De cette manière, le bourrelet peut non seulement se déformer facilement sous le poids des jambes du conducteur, mais peut également retrouver rapidement sa forme initiale en l'absence de contrainte.

De façon avantageuse, les deux bras sont reliés entre eux par une tige de liaison joignant leur extrémité inférieure, le garnissage comprenant une mousse et une coiffe, et ladite coiffe venant s'enfiler autour de cette tige de liaison. De cette manière, la coiffe du garnissage se déplace en même temps que les bras, et ne subit donc aucune tension particulière liée à ce déplacement. Il n'est donc pas nécessaire que cette coiffe soit élastique, un simple tissu résistant pouvant tout à fait convenir.

Les sièges réglables de véhicule selon l'invention, présentent l'avantage de mettre en oeuvre un dispositif de levage permettant de surélever l'assise du siège, et qui est dissocié de cette assise. Ce dispositif autonome n'impliquant qu'un bourrelet léger, par rapport au poids global et aux dimensions de l'assise, met en oeuvre un mécanisme de fonctionnement simplifié, facile d'utilisation et rapide à concevoir. Les sièges selon l'invention ont de plus l'avantage de posséder cette fonctionnalité supplémentaire à travers ce dispositif de levage de petite taille, tout en demeurant d'un encombrement sensiblement équivalent à celui des sièges existants. Enfin, le dispositif de levage qui est intégré dans les sièges selon l'invention, est ancré sur le dispositif de sécurité anti sous-marinage, sans modifier les caractéristiques structurelles de ce dispositif de sécurité et donc sans réduire son efficacité.

On donne ci-après une description détaillée d'un mode de réalisation préféré d'un siège réglable selon l'invention, en se référant aux figures 1 à 3.
- La figure 1 est une vue partielle en perspective de dessous, d'une structure d'assise d'un siège réglable selon l'invention,
- La figure 2a est une vue partielle en perspective, de coté d'une structure d'assise d'un siège selon l'invention, le bourrelet étant en position rentré,
- La figure 2b est une vue partielle en perspective, de coté d'une structure d'assise d'un siège selon l'invention, le bourrelet étant en position complètement déployée,

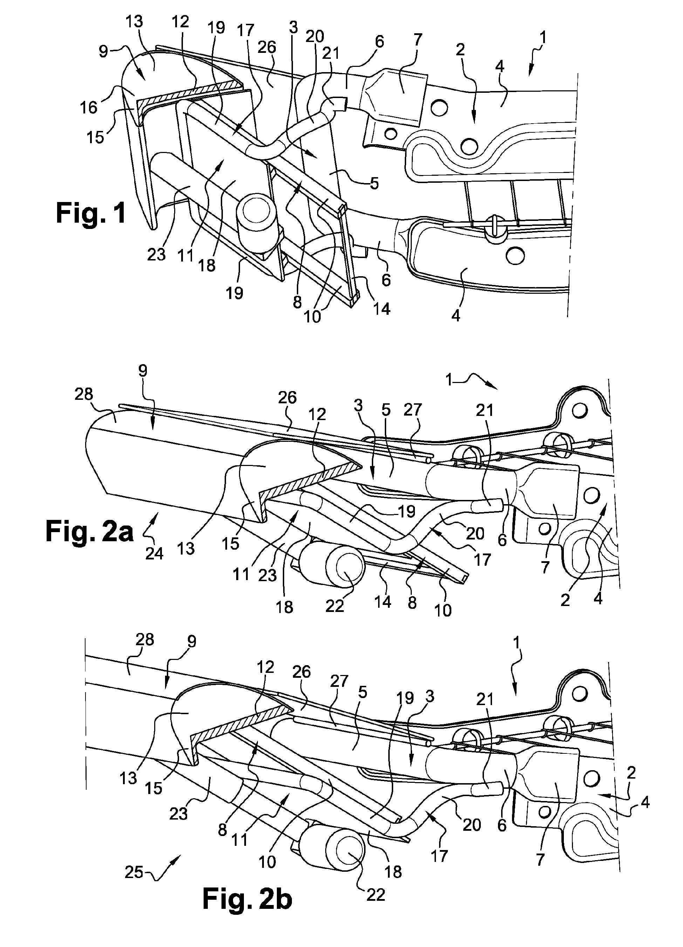

En se référant aux figures 1, 2a et 2b un siège réglable selon l'invention, comprend un dossier non représenté sur les figures, et une assise 1 constituée par une structure 2 et un garnissage. La structure 2 d'assise comprend à sa partie avant, un dispositif anti sous-marinage 3 sous la forme d'une barre transversale tubulaire 5, reliant deux flasques latéraux 4, chacun desdits flasques 4 étant inscrit dans un plan vertical et longitudinal du véhicule. Cette barre transversale tubulaire 5 est prolongée au niveau de ses deux extrémités, par deux bords latéraux longitudinaux 6 venant se solidariser aux deux flasques 4, lesdits bords latéraux 6 étant tubulaires et de même diamètre que celui de la barre 5 transversale. Le dispositif anti sous-marinage 3 se présente donc globalement sous la forme d'une pièce tubulaire en U légèrement inclinée par rapport à un plan horizontal, la barre transversale 5 constituant la partie avant de ce dispositif 3 et étant légèrement surélevée par rapport aux points 7 de contact des bords latéraux 5 avec les flasques 4. Un dispositif de levage 8, impliquant un bourrelet 9 en mousse ainsi que deux bras de positionnement 10 latéraux, est solidarisé à un dispositif de guidage 11, lui-même implanté sur le dispositif anti sous-marinage 3 au niveau de ses deux bords latéraux 6. Le bourrelet 9 en mousse est une pièce pleine, présentant une embase 12 inférieure plane et rigide, et une partie supérieure 13 arrondie, dont la courbure se dessine autour d'un axe transversal du véhicule. Les deux bras de positionnement 10 sont parallèles et inclinés, et sont reliés entre eux, d'une part, par l'embase 10 rigide du bourrelet 9 qui s'étend selon une direction transversale du véhicule, et d'autre part, par une tige de raccordement 14 reliant leurs extrémités inférieures, ladite embase 12 et ladite tige 14 se retrouvant parallèles entre eux. Il est à souligner que le bourrelet 8 bien qu'étant mou et déformable, présente une certaine rigidité mécanique grâce à son embase rigide 12, l'empêchant de s'étaler ou de s'écraser. La longueur du bourrelet 9 prise selon une direction transversale du véhicule, est sensiblement égale à la longueur de la barre 5 anti sous-marinage reliant les deux flasques 4. L'embase 12 du bourrelet 9 présente un bord 15 rectiligne en saillie, qui s'étend le long dudit bourrelet 9, selon une direction transversale du véhicule, ledit bord 15 saillant dans une direction qui est opposée à celle suivant laquelle saille la partie supérieure arrondie 13. De cette manière, l'embase 12 du bourrelet 9 forme un coude 16 permettant audit bourrelet 9 de venir se bloquer contre la partie avant de l'assise 1 du siège réglable, lorsqu'il se retrouve en position rentré comme l'indique la figure 2a. Le dispositif de guidage 11 comprend un cadre tubulaire 17 à trois cotés, occupée par une plaque 18 plane de faible épaisseur et de forme rectangulaire, les deux montants latéraux 19 et parallèles de ce cadre 17 étant prolongés par deux segments 20 parallèles, et perpendiculaires auxdits montants 19, chacune des extrémités libres 21 de ces segments 20 venant se fixer sur un bord latéral 6 du dispositif anti sous-marinage 3. Une motorisation 22 associée à une vis sans fin 23 est implantée sur la plaque 18 du dispositif de guidage 11, afin de faire coulisser simultanément les deux bras de positionnement 10 le long de ladite plaque 18 et suivant leur axe longitudinal, de manière à faire saillir de façon plus ou moins importante, le bourrelet 9 de l'assise 1 du siège. Le dispositif de guidage 11, et plus particulièrement la plaque 18 qui le constitue, se retrouve en position inclinée, entre une position verticale et une position horizontale. De cette manière, le dispositif de levage 8 en liaison avec le dispositif de guidage 11, permet de faire varier le bourrelet en mousse 9, entre une première position 24 arrière et basse comme indiqué à la figure 2a, et une deuxième position 25 avancée et surélevée, comme montré à la figure 2b. Le moteur 22 permet de figer le bourrelet 9 dans n'importe quelle position intermédiaire située entre cette première 24 et cette deuxième 25 position.

Une plaque rigide 26 de forme rectangulaire est montée articulée sur la barre transversale 5 d'anti sous-marinage, autour d'un axe transversal 27 s'étendant le long de ladite barre 5, au niveau de sa partie supérieure. Plus précisément, la plaque 26 est montée pivotante au niveau de sa partie arrière, tandis que sa partie avant repose sur la partie supérieure 13 du bourrelet 9 en mousse. Quelle que soit la position du bourrelet 8 par rapport à l'assise 1 du siège, la partie avant de la plaque rigide 26 demeure en appui sur ledit bourrelet 9. Afin de favoriser le glissement de l'extrémité avant de la plaque 26 sur le bourrelet 9, lorsque celui-ci change de position, la partie supérieure arrondie 13 dudit bourrelet 9 est recouverte partiellement par un film 28 de glissement lisse et réalisé en matière plastique. En effet, il est recommandé de ne pas recouvrir intégralement la partie supérieure 13 du bourrelet 9 avec ledit film 28, sous peine de rendre ledit bourrelet 9 trop rigide, et de lui faire perdre de sa souplesse. Ainsi, plus le bourrelet 9 se retrouve en position avancée et surélevée par rapport à l'assise 1 du siège, plus la plaque rigide 26 montée pivotante sur la barre 5 anti sous-marinage va se retrouver inclinée par rapport au plan horizontal de l'assise 1.

Il est naturellement supposé que l'assise 1 du siège est dotée d'un garnissage comprenant, de façon usuelle, une mousse et une coiffe en tissu, et recouvrant à la fois la plaque pivotante 26 montée sur la barre 5 anti sous-marinage et le dispositif de levage 8 incluant le bourrelet 9 en mousse. La coiffe en tissu du garnissage vient se fixer sous l'assise 1 du siège, au niveau de la tige 14 de raccordement reliant les deux extrémités inférieures des bras de positionnement 10. De cette manière, puisque le bourrelet 9 et lesdits bras 10 se déplacent concomitamment, la coiffe du garnissage suit globalement le mouvement et n'est donc soumise à aucune tension particulière susceptible de l'endommager, voire de la déchirer.

## Revendications

1. Siège réglable de véhicule comportant une assise (1) dotée d'un dispositif (3) anti sous-marinage, **caractérisé en ce qu'**il comporte un dispositif de levage (8) constitué par un bourrelet (9) en matériau mou et déformable et au moins un bras (10) de positionnement réglable supportant ledit bourrelet (9), chaque bras (10) pouvant coulisser le long d'un dispositif de guidage (11) solidarisé au dispositif anti sous-marinage (2), et **en ce qu'**une plaque mobile (26) est montée pivotante sur ledit dispositif anti sous-marinage (3) de manière à recouvrir ledit bourrelet (9), ledit dispositif de levage (8) et ladite plaque (26) étant recouverts par un garnissage.

2. Siège réglable selon la revendication 1, **caractérisé en ce que** le dispositif anti sous-marinage (3) est constitué par une barre (5) transversale et tubulaire.

3. Siège réglable selon l'une quelconque des revendications 1 ou 2, **caractérisé en ce que** chaque bras (10) est en position inclinée et est apte à subir une translation le long de son axe longitudinal pour régler la position du bourrelet (9).

4. Siège réglable selon la revendication 3, **caractérisé en ce qu'**il comprend deux bras (10) de positionnement latéraux et inclinés, et **en ce que** le bourrelet (9) s'étend selon une direction transversale du siège, ledit bourrelet (9) pouvant se déplacer entre une première position (24) rentrée pour laquelle il repose sur la partie avant de l'assise (1), et une deuxième position (25) complètement déployée pour laquelle ledit bourrelet (9) se retrouve dans une position avancée et surélevée par rapport à ladite assise (1).

5. Siège réglable selon la revendication 4, **caractérisé en ce que** le dispositif de levage (8) est piloté par un moteur (22) solidarisé au dispositif de guidage (11) et apte à fixer le bourrelet (9) dans n'importe quelle position intermédiaire comprise entre la première (24) et la deuxième (25) position.

6. Siège réglable selon l'une quelconque des revendications précédentes, **caractérisé en ce que** le bourrelet (9) comprend une embase (12) inférieure plane et rigide, et une partie supérieure (13) arrondie réalisée dans un matériau mou et déformable.

7. Siège réglable selon la revendication 6, **caractérisé en ce que** la partie supérieure (13) du bourrelet (9) est réalisée en mousse.

8. Siège réglable selon l'une quelconque des revendications 1 à 7, **caractérisé en ce qu'**une première extrémité de la plaque mobile (26) est montée articulée sur le dispositif anti sous-marinage (3), et **en ce qu'**une deuxième extrémité repose sur la partie supérieure (13) du bourrelet (9).

9. Siège réglable selon la revendication 8, **caractérisé en ce que** la plaque mobile (26) a une forme rectangulaire et est montée articulée au niveau de son extrémité arrière autour d'un axe transversal (27) du dispositif anti sous-marinage (3), ladite plaque (26) reposant sur le bourrelet (9) au niveau de son extrémité avant.

10. Siège réglable selon l'une quelconque des revendications 8 ou 9, **caractérisé en ce que** la partie supérieure (13) du bourrelet (9) est recouverte au moins partiellement par un film (28) favorisant le glissement de la plaque (26) sur ledit bourrelet (9), lorsque celui-ci est en mouvement entre deux positions.

11. Siège réglable selon l'une quelconque des revendications 1 à 10, **caractérisé en ce que** les deux bras (10) sont reliés entre eux par une tige de liaison (14) joignant leur extrémité inférieure, le garnissage comprenant une mousse et une coiffe, ladite coiffe venant s'enfiler autour de cette tige (14) de liaison.
